(19) Europäisches Patentamt
European Patent Office
Office européen des brevets

(11) **EP 1 840 687 A1**

(12) **EUROPEAN PATENT APPLICATION**

(43) Date of publication:
**03.10.2007 Bulletin 2007/40**

(51) Int Cl.:
***G05B 19/406*** (2006.01)

(21) Application number: **07006169.2**

(22) Date of filing: **26.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **31.03.2006 JP 2006099706**

(71) Applicant: **Fanuc Ltd
Minamitsuru-gun,
Yamanashi 401-0597 (JP)**

(72) Inventors:
• **Iwashita, Yasusuke
Fujiyoshida-shi
Yamanashi 403-0003 (JP)**

• **Okita, Tadashi
Fujiyoshida-shi
Yamanashi 403-0005 (JP)**
• **Kawamura, Hiroyuki
Minamitsuru-gun
Yamanashi 401-0301 (JP)**
• **Tezuka, Junichi
Minamitsuru-gun
Yamanashi 401-0511 (JP)**

(74) Representative: **Thum, Bernhard
Wuesthoff & Wuesthoff
Patent- und Rechtsanwälte
Schweigerstrasse 2
81541 München (DE)**

(54) **Electric motor control unit**

(57)     An electric motor control unit (10) comprises: a first position detecting means (31) for detecting a position of a mechanical movable portion (24) driven by an electric motor (20); a second position detecting means (32) for detecting a position of a rotary shaft (21) of the electric motor; a usual operation time movement command outputting means (12) for outputting a usual operation time movement command (Mc) by which the rotary shaft (21) of the electric motor is usually operated, and a stoppage time movement command outputting means (13) for outputting a stoppage time movement command (Mc0) by which the rotary shaft of the electric motor is stopped. In the electric motor control unit, at the time of usual operation, the usual operation time movement command is outputted and feedback control is conducted according to a position of the mechanical movable portion detected by the first position detecting means and, at the time of the occurrence of abnormal of the first position detecting means, changeover is made to output the stoppage time movement command from the stoppage time movement command outputting means and changeover is made to conduct feedback control according to the position of the rotary shaft of the electric motor detected by the second position detecting means so that the electric motor is stopped by the feedback control. Due to the foregoing, while a position of the gravity shaft is being controlled, the rotary shaft of the electric motor can be quickly stopped.

Fig.1

**Description**

BACKGROUND OF THE INVENTION

1. Field of the Invention

The present invention is related to an electric motor control unit for controlling an electric motor such as a servo motor connected to a feed shaft of a machine tool or an industrial machine or connected to a shaft such as an arm of an industrial robot.

2. Description of the Related Art

An electric motor such as a servo motor is connected to a shaft (mechanical movable portion) such as a feed shaft of a machine tool or industrial machine or a shaft of an arm of an industrial robot. When the position of the mechanical movable portion is controlled by the electric motor, feedback control is conducted according to the position of the mechanical movable portion or according to the position of the rotary shaft of the electric motor detected by a position sensor. In the case of semi-closed loop control in which the position of the mechanical movable portion is subjected to feedback control by controlling a position of the electric motor for driving the mechanical movable portion, the position of the electric motor is detected by a position sensor such as a rotary encoder. Full-closed-loop control is also adopted in which the position of the mechanical movable portion is detected by a position transducer such as a linear scale and the thus detected position is subjected to feedback control.

In the case where the electric motor, which has been in a state of control, is put into a state of no-control by emergency stop or electric power failure, it is usual that a rotary shaft of the electric motor is stopped using a dynamic brake. However, although a decelerating torque of the dynamic brake is higher than a decelerating torque of the electromagnetic brake, the decelerating torque of the dynamic brake is not very much higher than the decelerating torque of the electromagnetic brake. Therefore, it takes a relatively long period of time for the rotary shaft of the electric motor to be stopped by the dynamic brake. In the case where gravity acts on the rotary shaft, that is, in the case where the shaft is a gravity shaft (which is affected by gravity), when the electric motor is put into a state of no-control, the gravity shaft comes down.

According to the technique described in the specification of Japanese Patent No. 3,616,759, in the case where the electric motor, which has been in a state of control, is put into a state of no-control, a command is given so that the gravity shaft is raised by a predetermined distance not less than an amount of backlash of the brake device. In this way, the gravity shaft is prevented from coming down. However, according to the technique described in the specification of Japanese Patent No. 3,616,759, the gravity shaft is subjected to position control. Therefore, in the case where abnormality is caused in the position sensor used for position control, it is impossible to raise the gravity shaft. On the other hand, according to the technique described in Japanese Unexamined Patent Publication No. 10-277887, in the case where abnormality is caused in the position sensor provided on the full-closed side, the mechanical movable portion is stopped by changing over the control of the mechanical movable portion from position control to speed control. Therefore, according to the technique described in Japanese Unexamined Patent Publication No. 10-277887, even when abnormality is caused in the position sensor, it is possible to control the mechanical movable portion.

However, according to the technique described in Japanese Unexamined Patent Publication No. 10-277887, as the control of the mechanical movable portion has already been changed over to speed control, it is impossible to conduct position control on the mechanical movable portion. Therefore, according to the technique described in Japanese Unexamined Patent Publication No. 10-277887, in the case where abnormality is caused in the position sensor, it is impossible to conduct a control in which a position of the gravity shaft can be maintained or raised.

The present invention has been accomplished in view of the above circumstances. It is an object of the present invention to provide an electric motor control unit capable of quickly stopping an electric motor while the position of a gravity shaft is being controlled.

SUMMARY OF THE INVENTION

In order to accomplish the above object, the first aspect of the invention provides an electric motor control unit comprising: a first position detecting means for detecting a position of a mechanical movable portion driven by an electric motor; a second position detecting means for detecting a position of a rotary shaft of the electric motor; a usual operation time movement command outputting means for outputting a usual operation time movement command by which the rotary shaft of the electric motor is usually operated; and a stoppage time movement command outputting means for outputting a stoppage time movement command by which the rotary shaft of the electric motor is stopped, wherein at the time of usual operation, the usual operation time movement command is outputted from the usual operation time movement command outputting means and feedback control is conducted according to a position of the mechanical movable portion detected by the first position detecting means, and at the time of the occurrence of abnormal in the first position detecting means, changeover is made to output the stoppage time movement command from the stoppage time movement command outputting means and changeover is made to conduct feedback control according to the position of the rotary shaft of the electric motor detected by the second position detecting means and the electric motor is stopped.

In the first aspect, positional control is conducted after the positional feedback has been changed over from the position of the mechanical movable portion to the position of the rotary shaft of the electric motor, that is, after the positional feedback has been changed over from the full-closed side to the semi-closed side. That is, in the first aspect, even after the changeover has been completed, the positional control is conducted. Therefore, it is possible to control a position of the gravity shaft. Further, since the rotary shaft is stopped by the positional control, as compared with a case in which the dynamic brake is used, it is possible to quickly stop the electric motor. For example, a stoppage time movement command can be zero.

According to the second aspect, in the first aspect, at the time of the occurrence of abnormal in the first position detecting means, an initial value of positional deviation, which is made according to deviation between a movement command sent from the usual operation time movement command outputting means or the stoppage time movement command outputting means and a position of the mechanical movable portion or the rotary shaft of the electric motor, is made to be zero.

In the second aspect, at a position of the rotary shaft of the electric motor when the changeover operation for changing over from the full-closed side to the semi-closed side is conducted, the rotary shaft can be stopped.

According to the third aspect, in the first embodiment, at the time of the occurrence of an abnormality in the first position detecting means, an initial value of positional deviation, which is made according to deviation between a movement command sent from the usual operation time movement command outputting means or the stoppage time movement command outputting means and a position of the mechanical movable portion or the rotary shaft of the electric motor, is selected so that the rotary shaft of the electric motor, which has been moved from when an abnormality of the first position detecting means is caused to when the electric motor is stopped, can be returned.

In the third aspect, the rotary shaft is moved to a position before the position of the rotary shaft of the electric motor when the changeover operation is conducted from the full-closed side to the semi-closed side so as to prevent the shaft from moving down due to gravity.

According to the fourth aspect, in the first embodiment, an electric motor control unit further comprises: a speed detection means for detecting a speed of the rotary shaft of the electric motor, wherein at the time of the occurrence of abnormal in the first position detecting means, an initial value of positional deviation, which is made according to deviation between a movement command sent from the usual operation time movement command outputting means or the stoppage time movement command outputting means and a position of the mechanical movable portion or the rotary shaft of the electric motor, is calculated according to the speed of the rotary shaft of the electric motor detected by the speed detecting means at the time of conducting the changeover operation.

In the fourth aspect, it is possible to prevent the speed of the rotary shaft of the electric motor from becoming discontinuous at the time before and after the changeover operation from the full-closed side to the semi-closed side. As a result, it is possible to prevent a generation of shock in the electric motor control unit, the electric motor and the mechanical movable portion when a step portion is generated in the speed change.

According to the fifth aspect, in the first embodiment, the stoppage time movement command, which is sent from the stoppage time movement command outputting means at the time of the occurrence of abnormality in the first position detecting means, is a value different from zero.

In the fifth aspect, it is possible to avoid the occurrence of overshooting which can be generated in the case where the stoppage time movement command is zero.

According to the sixth aspect, in the first embodiment, the stoppage time movement command, which is sent from the stoppage time movement command outputting means at the time of the occurrence of abnormality in the first position detecting means, is decreased by a linear function according to the elapsed time from the time of the occurrence of abnormality in the first position detecting means.

In the sixth aspect, the rotary shaft makes a uniformly accelerated motion. Therefore, the rotary shaft can be smoothly, quickly stopped. In this connection, the stoppage time movement command may be decreased by a quadratic function or an exponential function in accordance with the elapsed time.

From the detailed explanation of the typical embodiment of the present invention shown in the accompanying drawings, the objects, characteristics and advantages of the present invention will become more apparent.

BRIEF DESCRIPTION OF THE DRAWINGS

Fig. 1 is a functional block diagram showing an electric motor control unit of the present invention.

Fig. 2 is a view showing an outline of a flow chart of an electric motor control unit of the present invention.

Fig. 3 is a graph showing a relation between the elapsed time after the completion of changeover operation and the movement command.

## DETAILED DESCRIPTION

By referring to the accompanying drawings, an embodiment of the present invention will be explained below. In the following drawings, like reference numerals are used to indicate like parts. In order to facilitate understanding, an appropriate scale is used in these drawings.

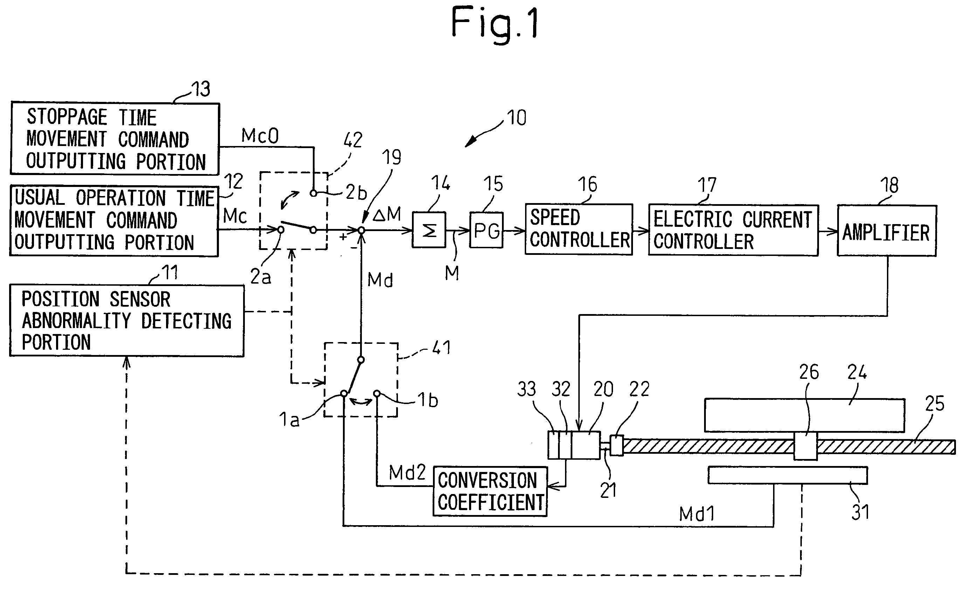

Fig. 1 is a functional block diagram showing an electric motor control unit of the present invention. A rotary shaft 21 of a servo motor 20, which is an electric motor, is connected to a feed screw shaft 25 of a ball screw mechanism via a connecting portion 22. A nut 26 of the ball screw mechanism is connected to a mechanical movable portion 24. Due to the above structure, the mechanical movable portion 24 advances/retreats along the feed screw shaft 25 according to a motion made by the ball screw mechanism.

An electric motor control unit 10 of the present invention is a digital computer. The electric motor control unit 10 of the present invention also includes a first position sensor 31, such as a linear scale which is arranged adjacent to the mechanical movable portion 24 as shown in the drawing. The first position sensor 31 detects positional information of a nut 26 in the mechanical movable portion 24, that is, the first position sensor 31 detects full-closed side positional information and the thus detected full-closed side positional information is fed back. In this connection, strictly speaking, the positional information detected by the first position sensor 31 is an amount of movement Md1 per unit time of the nut 26. The amount of movement Md1 per unit time of the nut 26 represents an amount of movement of the mechanical movable portion 24 per unit time.

The electric motor control unit 10 also includes a second position sensor 32 attached to the servo motor 20, such as a rotary encoder. The second position sensor 32 detects positional information of the rotary shaft 21 of the servo motor 20, that is, the second position sensor 32 detects semi-closed side positional information. The thus detected positional information is multiplied by a conversion coefficient and then fed back. In this connection, strictly speaking, the positional information detected by the second position sensor 32 is an amount of movement Md2 per unit time of the rotary shaft 21.

Further, the electric motor control unit 10 also includes a first switch 41 for changing over between the amount of movement Md1 of the mechanical movable portion 24 detected by the first position sensor 31 and the amount of movement Md2 of the rotary shaft 21 detected by the second position sensor 32. As shown in the drawing, the first switch 41 is usually changed over onto a contact 1a side so that the amount Md1 of the mechanical movable portion 24 can be transmitted.

The electric motor control unit 10 also includes an abnormality detecting portion 11 for detecting the occurrence of abnormality in the first position sensor 31. Specifically, the abnormality detecting portion 11 receives an abnormality signal which is emitted when the first position sensor 31 can not detect a position. In this way, the abnormality detecting portion 11 detects that abnormality is caused in the first position sensor 31.

Further, the electric motor control unit 10 includes: a usual operation time movement command outputting portion 12 for outputting a movement command Mc of the servo motor 20 at the time of usual operation; and a stoppage time movement command outputting portion 13 for outputting a stoppage time movement command Mc0 of the servo motor 20 at the time of stopping the servo motor 20. For example, the stoppage time movement command Mc0 may be zero.

In Fig. 1, a speed detector 33 is provided which detects a speed of the rotary shaft 21 of the servo motor 20. In this connection, the speed of the rotary shaft 21 may be calculated according to an amount of movement per unit time obtained by the second position sensor 32.

As shown in the drawing, the first switch 41 of the electric motor control unit 10 changes over between the amount of movement Md1, which is sent from the first position sensor 31, and the amount of movement Md2 which is obtained by the second position sensor 32 and multiplied by a conversion coefficient. The first switch 41 is usually changed over onto the contact 1a side so that the amount of movement Md1 sent from the first position sensor 31 can be outputted from the first switch 41.

Further, as shown in the drawing, the second switch 42 of the electric motor control unit 10 changes over between the movement command Mc, which is sent from the usual operation time movement command outputting portion 12, and the stoppage time movement command Mc0 which is sent from the stoppage time movement command outputting portion 13. The second switch 42 is usually changed over onto the contact 2a side so that the movement command Mc, which is sent from the usual operation time movement command outputting portion 12, can be outputted.

At the time of usual operation, in a deviation calculating portion 19, the positional information on the full-closed side, that is, the amount of movement Md1 is subtracted from the movement command Mc sent from the usual operation time movement command outputting portion 12. Therefore, the deviation ΔM (= Mc - Md1) is calculated. The deviation ΔM is successively accumulated in an accumulation circuit 14 and calculated as the positional deviation M. The positional deviation M is transmitted to the speed controller 16 under the condition that the positional deviation M is multiplied by a position gain 15 on the basis of a well known method. Next, a current command is made in the speed controller 16. After that, the current command is transmitted to an electric current controller 17 and an electric voltage command is made in the electric current controller 17. The electric voltage command is amplified by an amplifier 18. Then, the electric voltage command is transmitted to the servo motor 20. Therefore, the rotary shaft 21 is rotated according to the speed command.

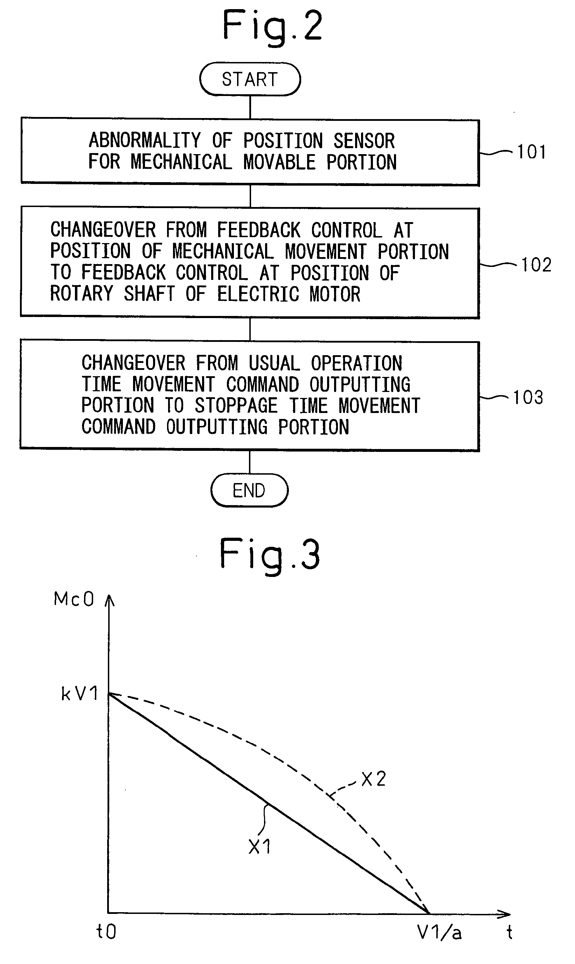

Fig. 2 is a view showing an outline of a flow chart of the electric motor control unit of the present invention. Referring to Figs. 1 and 2, explanations will be made into an operation of the electric motor control unit 10 at the time of the occurrence of abnormality in the first position sensor 31.

In step 101 in the flow chart shown in Fig. 2, the occurrence of an abnormality of the first position sensor 31 for the mechanical movable portion 24 is detected by the abnormality detecting portion 11 of the electric motor control unit 10. That is, the abnormality detecting portion 11 receives an abnormality signal which is emitted when the first position sensor 31 can not detect a position. In this way, the occurrence of abnormality of the first position sensor 31 can be detected.

Next, in step 102, the abnormality detecting portion 11 of the electric motor control unit 10 changes over the first switch 41 from the contact 1a side to the contact 1b side. Due to the foregoing, the semi-closed side positional information sent from the second position sensor 32 is outputted, that is, the amount of movement Md2 is outputted. Accordingly, in this case, in the deviation calculation portion 19, the deviation ΔM is temporarily calculated as ΔM (= Mc - Md2).

As shown in step 103, simultaneously when the first switch 41 is changed over, the abnormality detecting portion 11 changes over the second switch 42 from the contact 2a side to the contact 2b side. Due to the foregoing, the stoppage time movement command Mc0 is outputted from the stoppage time movement command outputting portion 13. Accordingly, in the deviation calculation portion 19, the deviation ΔM is calculated as ΔM (= Mc0 - Md2).

In the present invention, in the case where abnormality is caused in the first position sensor 31, the control is not changed over from the position control to the speed control but the control is changed over from the positional information Md1 on the full-closed side to the positional information Md2 on the semi-closed side, so that the positional control can be successively conducted. Therefore, according to the present invention, even after abnormality has been caused in the first position sensor 31, the rotary shaft 21 can be successively subjected to positional control. Therefore, according to the present invention, when the positional control is successively conducted even after the occurrence of abnormality, it is possible to prevent the gravity shaft from coming down.

Further, in the present invention, at the time of the occurrence of abnormality, while position control is being continuously conducted, the stoppage time movement command Mc0 is outputted from the stoppage time movement command outputting portion 13. For example, the stoppage time movement command Mc0 is zero. In this case, as compared with a case in which a dynamic brake is used, the rotary shaft 21 of the servo motor 20 can be quickly stopped.

In this connection, in the case where abnormality is caused in the first position sensor 31, after the first switch 41 and the second switch 42 have been changed over, the positional deviation M may be initialized by zero. Due to this operation, the rotary shaft 21 of the servo motor 20 is stopped at the position where the changeover operation was conducted.

In this connection, the deviation ΔM includes: the deviation ΔM (= Mc - Md1) which is the deviation before the first switch 41 is changed over; and the deviation ΔM (= Mc0 - Md2) which is the deviation after both the first switch 41 and the second switch 42 have been changed over.

In another embodiment of the present invention, after the first switch 41 and the second switch 42 have been changed over, the positional deviation M may be initialized by a predetermined value different from zero. This predetermined value is a value sufficient for returning the rotary shaft 21, which has moved from the time of the occurrence of abnormality in the first position sensor 31 to the time when the rotary shaft 21 of the servo motor 20 is stopped, to a position where abnormality was caused in the first position sensor 31. This predetermined value was already found by experiment etc. and is previously stored in a storage portion (not shown) of the electric motor control unit 10.

Setting of the predetermined value as described above is especially advantageous when the rotary shaft 21 is a gravity shaft to which gravity exerts. In this case, the predetermined value is determined so that the rotary shaft 21 can be pulled up by a distance corresponding to a fall caused from the occurrence of abnormality in the first position sensor 31 to the stoppage of the rotary shaft 21.

In still another embodiment of the present invention, after changeover operation has been conducted by the first switch 41 and the second switch 42, the positional deviation M is calculated according to a speed of the rotary shaft 21 of the servo motor 20, especially according to the speed V1 of the rotary shaft 21 at the time of changeover of the first switch 41 and the second switch 42. In other words, the speed V1 is a speed of the rotary shaft 21 at the time of the occurrence of abnormality in the first position sensor 31. The speed V1 of the rotary shaft 21 may be detected by the speed detector 33. Alternatively, the speed V1 of the rotary shaft 21 may be calculated from the result of detection by the second position sensor 32.

In still another embodiment of the present invention, the positional deviation M is initialized by a value k·V1 which is obtained when the speed V1 of the rotary shaft 21 obtained from the speed detector 33 or the second position sensor 32 is multiplied by a predetermined coefficient k. In this case, the coefficient k is a predetermined value selected by an operator. That is, the positional deviation M is initialized according to the speed V1 of the rotary shaft 21 at the time of changing over the first switch 41 and the second switch 42. Therefore, it is possible to prevent the speed of the rotary shaft 21 from being greatly changed before and after the changeover operation. Accordingly, in the present invention, it is possible to prevent a generation of shock in the electric motor control unit, the electric motor and the mechanical movable portion before and after the changeover operation made by the first switch 41 and the second switch 42.

In the embodiment described above, there is a case in which the stoppage time movement command McO, which is outputted from the stoppage time movement command outputting portion 13, is made to be zero. In this case, there is a possibility of the occurrence of overshooting of the rotary shaft 21 after the changeover operation. In order to avoid the occurrence of overshooting, in still another embodiment, the stoppage time movement command Mc0, which is outputted from the stoppage time movement command outputting portion 13, is made to a value different from zero. This value different from zero is calculated as follows by using the speed V1 of the rotary shaft 21 at the time of the occurrence of abnormality in the first position sensor 31.

In the present embodiment, when the speed V1 is multiplied by a predetermined coefficient k, the stoppage time movement command Mc0 (= k·V1) is made. This coefficient k may be the same as the coefficient k in the embodiment described above. Next, according to a predetermined acceleration "a" at the time of stopping the rotary shaft 21 by the operator, the speed V of the rotary shaft 21 after the occurrence of abnormality is determined as described in the following formula (1).

$$V = V1 - a \cdot t \qquad\qquad \text{Formula (1)}$$

In this connection, in formula (1), letter t represents the time. The predetermined acceleration "a" is lower than the maximum acceleration "amax" which is determined by the maximum torque and inertia of the servo motor 20. This predetermined acceleration "a" is selected as a value appropriate for stopping the rotary shaft 21.

When formula (1) is used, the stoppage time movement command Mc0 is expressed by formula (2) as follows.

$$Mc0 = k \cdot (V1 - a \cdot t) \qquad\qquad \text{Formula (2)}$$

Fig. 3 is a graph showing a relation between the elapsed time and the movement command, that is, formula (2) is expressed by the graph. In Fig. 3, the axis of abscissas represents the time and the axis of ordinates represents the stoppage time movement command Mc0.

Assume that abnormality is caused in the first position sensor 31 at the time t0 in Fig. 3. Then, the rotary shaft 21 conducts a uniformly accelerated motion as shown by the solid line X1 and stops at the time v1/a. In the present embodiment, the rotary shaft 21 is made to conduct a uniformly accelerated motion by a predetermined acceleration "a". Therefore, the rotary shaft 21 is smoothly and quickly stopped. Since the stoppage time movement command Mc0 is not zero at the time t0, it is possible to prevent the rotary shaft 21 from overshooting. In the case where the operator desires a quicker stoppage of the rotary shaft 21, it is sufficient to select a higher acceleration "a". In the case where the operator desires to more positively suppress the generation of shock, it is sufficient to select a lower acceleration "a". In this connection, the scope of the present invention includes a case in which the stoppage time movement command Mc0 is decreased by a quadratic function or an exponential function in accordance with the elapsed time as shown by the broken line X2 in Fig. 3.

The present invention has been explained above referring to the typical embodiment. However, it should be noted that variations may be made, by those skilled in that art, without departing from the scope of the present invention.

**Claims**

1. An electric motor control unit (10) comprising:

a first position detecting means (31) for detecting a position of a mechanical movable portion (24) driven by an electric motor (20);
a second position detecting means (32) for detecting a position of a rotary shaft (21) of the electric motor (20); and
a usual operation time movement command outputting means (12) for outputting a usual operation time movement command by which the rotary shaft (21) of the electric motor (20) is usually operated, **characterized in that** the electric motor control unit (10) further comprises:

a stoppage time movement command outputting means (13) for outputting a stoppage time movement command by which the rotary shaft (21) of the electric motor (20) is stopped, wherein
at the time of usual operation, the usual operation time movement command is outputted from the usual operation time movement command outputting means (12) and feedback control is conducted according to a position of the mechanical movable portion (24) detected by the first position detecting means (31), and at the time of the occurrence of abnormal of the first position detecting means (31), changeover is made to output the stoppage time movement command from the stoppage time movement command outputting means (13) and changeover is made to conduct feedback control according to the position of the rotary shaft (21) of the electric motor (20) detected by the second position detecting means (32) so that the electric motor (20) can be stopped.

2. An electric motor control unit according to claim 1, wherein at the time of the occurrence of abnormal in the first position detecting means (31), an initial value of positional deviation, which is made according to deviation between a movement command sent from the usual operation time movement command outputting means (12) or the stoppage time movement command outputting means (13) and a position of the mechanical movable portion (24) or the rotary shaft (21) of the electric motor (20), is made to be zero.

3. An electric motor control unit according to claim 1, wherein at the time of the occurrence of abnormality in the first position detecting means (31), an initial value of positional deviation, which is made according to deviation between a movement command sent from the usual operation time movement command outputting means (12) or the stoppage time movement command outputting means (13) and a position of the mechanical movable portion (24) or the rotary shaft (21) of the electric motor (20), is selected so that the rotary shaft (21) of the electric motor (20), which has been moved from when abnormality of the first position detecting means (31) is caused to when the electric motor (20) is stopped, can be returned.

4. An electric motor control unit according to claim 1, further comprising: a speed detection means for detecting a speed of the rotary shaft (21) of the electric motor (20), wherein
at the time of the occurrence of abnormality in the first position detecting means (31), an initial value of positional deviation, which is made according to deviation between a movement command sent from the usual operation time movement command outputting means (12) or the stoppage time movement command outputting means (13) and a position of the mechanical movable portion (24) or the rotary shaft (21) of the electric motor (20), is calculated according to the speed of the rotary shaft (21) of the electric motor (20) detected by the speed detecting means at the time of conducting the changeover operation.

5. An electric motor control unit according to claim 1, wherein the stoppage time movement command, which is sent from the stoppage time movement command outputting means (13) at the time of the occurrence of abnormality in the first position detecting means (31), is a value different from zero.

6. An electric motor control unit according to claim 1, wherein the stoppage time movement command, which is sent from the stoppage time movement command outputting means (13) at the time of the occurrence of abnormality in the first position detecting means (31), is decreased by a linear function according to the elapsed time from the time of the occurrence of abnormality in the first position detecting means (31).

# Fig.1

# Fig.2

```
      ( START )
          │
┌─────────────────────────────────┐
│ ABNORMALITY OF POSITION SENSOR  │─── 101
│ FOR MECHANICAL MOVABLE PORTION  │
└─────────────────────────────────┘
          │
┌─────────────────────────────────┐
│ CHANGEOVER FROM FEEDBACK CONTROL AT │
│ POSITION OF MECHANICAL MOVEMENT PORTION │─── 102
│ TO FEEDBACK CONTROL AT POSITION OF  │
│ ROTARY SHAFT OF ELECTRIC MOTOR   │
└─────────────────────────────────┘
          │
┌─────────────────────────────────┐
│ CHANGEOVER FROM USUAL OPERATION │
│ TIME MOVEMENT COMMAND OUTPUTTING │─── 103
│ PORTION TO STOPPAGE TIME MOVEMENT │
│ COMMAND OUTPUTTING PORTION     │
└─────────────────────────────────┘
          │
       ( END )
```

# Fig.3

**European Patent Office**

**EUROPEAN SEARCH REPORT**

Application Number

EP 07 00 6169

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 857 814 A (JANG KWAN SOON [KR]) 12 January 1999 (1999-01-12) * column 8, line 65 - column 9, line 10 * ----- | 1-6 | INV. G05B19/406 |
| A | EP 1 591 850 A (CHARMILLES TECHNOLOGIES [CH]) 2 November 2005 (2005-11-02) * abstract * ----- | 1-6 | |
| A,D | EP 1 304 604 A (FANUC LTD [JP]) 23 April 2003 (2003-04-23) * abstract * ----- | 1-6 | |

TECHNICAL FIELDS
SEARCHED (IPC)

G05B

The present search report has been drawn up for all claims

| Place of search | Date of completion of the search | Examiner |
|---|---|---|
| Munich | 18 July 2007 | MESSELKEN, M |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 07 00 6169

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2007

| Patent document cited in search report | | Publication date | Patent family member(s) | | Publication date |
|---|---|---|---|---|---|
| US 5857814 | A | 12-01-1999 | DE | 19644694 A1 | 07-05-1997 |
| | | | JP | 9168909 A | 30-06-1997 |
| EP 1591850 | A | 02-11-2005 | CN | 1690898 A | 02-11-2005 |
| | | | JP | 2005317014 A | 10-11-2005 |
| | | | US | 2005238043 A1 | 27-10-2005 |
| EP 1304604 | A | 23-04-2003 | JP | 3616759 B2 | 02-02-2005 |
| | | | JP | 2003131701 A | 09-05-2003 |
| | | | US | 2003076066 A1 | 24-04-2003 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3616759 B

- JP 10277887 A